# EUROPÄISCHE PATENTANMELDUNG

(11) **EP 1 201 735 A1**
(43) Veröffentlichungstag der Anmeldung: **02.05.2002**
(21) Anmeldenummer: 01710053.8
(22) Anmeldetag: 12.10.2001
(51) Int. Cl.: C10M 173/02, C11D 1/06, C11D 1/29, C09K 3/30

(54) **Wässriger Kühlschmierstoff zur mechanischen Entfernung von Polymeren auf Polyurethanbasis**

(30) Priorität: 27.10.2000 DE 10053940
(71) Anmelder: Huber Friedrich Aeronova GmbH & Co., 01257 Dresden (DE)
(72) Erfinder: Opitz, Steffen, Dr.rer.nat., 01259 Dresden (DE)
(74) Vertreter: Pfenning, Meinig & Partner GbR

(57) **Zusammenfassung**

Die Erfindung betrifft einen Kühlschmierstoff zum mechanischen Entfernen von Polymeren auf Polyurethanbasis von Oberflächen. Dabei soll aufgabengemäß die mechanische Entfernung erleichtert und eine Beschädigung bzw. Beeinträchtigung der jeweiligen Oberfläche verhindert werden. Erfindungsgemäß ist der Kühlschmierstoff eine wässrige Lösung eines anionischen Tensides, dessen Oberflächenspannung im Bereich zwischen 20 bis 45 mN/m liegt. Vorteilhaft wird der Kühlschmierstoff zur mechanischen Entfernung von Karosserie- oder Scheibenklebern auf Polyurethanbasis von metallischen Oberflächen oder Fahrzeugkarosserie- oder Fahrzeuginnenverkleidungsteilen verwendet.

## Beschreibung

Die Erfindung betrifft einen Kühlschmierstoff zum mechanischen Entfernen von Polymeren auf Polyurethanbasis von Oberflächen, wobei diese Oberflächen vom Kühlschmierstoff nicht chemisch angegriffen werden sollen. Bei den Polymeren auf Polyurethanbasis handelt es sich insbesondere um Kleber, die zur Befestigung von Glasscheiben oder anderen Teilen an Kraftfahrzeugen benutzt werden.

Solche Kleber werden seit längerer Zeit im Kraftfahrzeugbau für die Befestigung von, wie bereits erwähnt, Glasscheiben oder anderen Teilen, wegen ihrer mechanischen, chemischen Eigenschaften und ihre Alterungsbeständigkeit benutzt.

Bei Reparaturarbeiten und insbesondere beim Austausch alter gegen neue Teile ist es erforderlich, die Polyurethankleber von der Klebeoberfläche zu entfernen, wobei die jeweilige Oberfläche unabhängig davon, ob es sich um ein lakiertes Karosserieblechteil oder ein Kunststoffteil handelt, nicht zumindest jedoch nur geringfügig angegriffen oder gar beschädigt werden darf. Dies schließt die Verwendung von organischen Lösungsmitteln aus, so dass bisher diese Polyurethankleber ausschließlich mechanisch mit Schneid- oder Schabwerkzeugen entfernt worden sind. Hierfür ist ein hohes Maß an Geschicklichkeit und Kraft erforderlich, um die jeweilige Oberfläche weitestgehend von Polyurethankleberresten zu befreien, ohne entsprechende Beschädigungen an der Oberfläche hervorzurufen bzw. schützende Farb- und Lackschichten ungewollt zu entfernen.

Außerdem tritt bei der allein mechanischen Entfernung solcher Polyurethankleber eine erhebliche Erwärmung auf und die Kleberreste können ungewollt an schwer zugänglichen Teilen eines solchen Fahrzeuges abgelagert und demzufolge nur schwer wieder entfernt werden. Die Erwärmung führt zu einer Ausdehnung des Polyurethanklebers, so dass ein ausgebildeter Schneidspalt ungewollt verengt wird.

Es ist daher Aufgabe der Erfindung, ein Mittel zur Verfügung zu stellen, mit dem die mechanische Entfernung von Polymeren auf Polyurethanbasis von Oberflächen erleichtert und eine Beschädigung bzw. Beeinträchtigung der jeweiligen Oberfläche verhindert wird.

Erfindungsgemäß wird diese Aufgabe mit einem Kühlschmierstoff gemäß Anspruch 1 gelöst. Vorteilhafte Ausgestaltungsformen und Weiterbildungen der Erfindung, können mit den in den untergeordneten Ansprüchen genannten Merkmalen erreicht werden.

Bei dem erfindungsgemäßen Kühlschmierstoff handelt es sich um eine ein anionisches Tensid enthaltende wässrige Lösung, deren Oberflächenspannung im Bereich zwischen 20 bis 45 mN/m liegt. Es sind keine organischen Lösungsmittelbestandteile enthalten, so dass die jeweilige vom Polymer zu befreiende Oberfläche chemisch nicht angegriffen wird.

Die Oberflächenspannung des erfindungsgemäßen Kühlschmierstoffes sollte mit der Ringmethode nach du Noüy bestimmt werden, wobei die üblichen Parameter, wie die Messung bei einer Temperatur von 20 °C eingehalten werden sollen und ein sogenanntes Krüss-Tensiometer K12 benutzt werden kann.

Bei dem anionischen Tensid kann es sich um eines, das der allgemeinen Formel

(R―O―(CH₂)ₙ)ₘ―O―X⁻M⁺,

vorteilhaft entspricht, handeln. Dabei sind
R = Alkyl(C₆-C₃₄),
X = CH₂COO⁻, SO₃⁻
M = Alkalimetalle, NH₄,
1 ≤ n ≤ 5 und 1 ≤ m ≤ 5.

Ein solches Tensid erfüllt die eingangs genannten Forderungen und ist zusätzlich physiologisch und toxikologisch unbedenklich, so dass es ohne zusätzliche Vorsichtsmaßnahmen eingesetzt werden kann und auch für die Umwelt unbedenklich ist.

Bevorzugt wird als Tensid Natriumlaurylethercarboxylat eingesetzt.

Das Tensid sollte in dem mineralisierten Wasser mit einem Anteil zwischen 0,2 bis 5 Masse-%, bevorzugt bis 2,5 Masse-% enthalten und gelöst sein.

Ein bevorzugter Oberflächenspannungsbereich, der eingehalten werden sollte, liegt zwischen 25 und 35 mN/m.

Vor der mechanischen Entfernung von Polymeren auf Polyurethanbasis von unterschiedlichsten Oberflächen und insbesondere von Polyurethanklebern mit herkömmlichen Schneid- oder Schabwerkzeugen, wird der erfindungsgemäße Kühlschmierstoff auf das zu entfernende Polymer bzw. den Polyurethankleber möglichst vollständig benetzend, aufgetragen oder aufgesprüht und im Anschluß daran die mechanische Entfernung durchgeführt. Dabei ist keine vollständige Entfernung erforderlich. Es können Reste auf der Oberfläche verbleiben.

Der Auftrag des Kühlschmierstoffes kann beispielsweise mit einem Pinsel, besser jedoch durch Aufsprühen in Aerosolform aus einem den Kühlschmierstoff und ein gasförmiges Treibmittel enthaltenden Druckgasbehälter (z.B. Spraydose) erfolgen.

Als Treibgas sollte aus Sicherheits- und Umweltunbedenklichkeitsgründen bevorzugt CO₂ eingesetzt werden. Vorteilhafterweise können dem aus Tensid und Wasser gebildeten Kühlschmierstoff auch ein Korrosionsschutzmittel zugegeben werden. Ein bevorzugtes Korrosionsschutzmittel ist beispielsweise Dinatriumhydrogenphosphat. Die Zugabe eines solchen Korrosionsschutzmittels ist insbesondere zweckmäßig, wenn ein Druckgasbehälter zum Versprühen des Kühlschmierstoffes verwendet wird, der im Wesentlichen aus Metall (insbesondere Weißblech) besteht.

Der Anteil des Korrosionsschutzmittels im Kühlschmierstoff sollte zwischen 0,3 bis 1 Masse-% eingestellt sein.

Der erfindungsgemäße Kühlschmierstoff sichert eine vollständige Benetzung auch im bei der mechanischen Entfernung ausgebildeten Schneidspalt, so dass neben dem erforderlichen Kraftaufwand bei der manuellen Entfernung auch der Verschleiß bis zu mehr als 50 % der Werkzeuge verringert werden kann. Mit dem erfindungsgemäßen Kühlschmierstoff können sowohl Wärme, wie auch bei der mechanischen Entfernung auftretende Polymer-Späne abgeführt werden.

Gegebenenfalls auf der Oberfläche verbliebene Reste des Kühlschmierstoffes können im Anschluß an die mechanische Entfernung und gegebenenfalls auch zwischendurch mit Wasser abgewaschen werden.

Im Anschluß an die Entfernung eines Polyurethanklebers der beispielsweise unter der Handelsbezeichnung "HOT" von der Firma Normfest kommerziell erhältlich ist, kann ein erneuter Auftrag eines solchen Polyurethanklebers zur Befestigung eines neuen Teiles oder einer neuen Scheibe an einer Fahrzeugkarosserie oder einem Fahrzeugteil auf herkömmliche Art und Weise aufgetragen, und die entsprechenden Teile wieder sicher befestigt werden.

Ein erfindungsgemäßer Kühlschmierstoff kann als Beispiel neben demineralisiertem Wasser 97 Masse-%, 2,5 Masse-% Natriumlaurylethercarboxylat sowie 0,5 Masse-% Dinatriumhydrogenphosphat enthalten und eine Oberflächenspannung von 31 mN/m aufweisen.

## Patentansprüche

1. Kühlschmierstoff zur mechanischen Entfernung von Polymeren auf Polyurethanbasis von Oberflächen, der als wässrige Lösung ein anionisches Tensid enthält und dessen Oberflächenspannung im Bereich zwischen 20 bis 45 mN/m liegt.

2. Kühlschmierstoff nach Anspruch 1,
**dadurch gekennzeichnet,**
**dass** das Tensid der allgemeinen Formel I 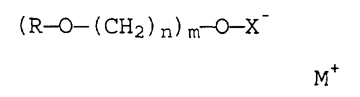 entspricht;
wobei
R = Alkyl(C₆-C₃₄),
X = CH₂COO⁻, SO₃⁻
M = Alkalimetalle, NH₄,
1 ≤ n ≤ 5 und 1 ≤ m ≤ 5
sind.

3. Kühlschmierstoff nach Anspruch 1 oder 2, **dadurch gekennzeichnet, dass** das Tensid Natriumlaurylethercarboxylat ist.

4. Kühlschmierstoff nach einem der Ansprüche 1 bis 3, **dadurch gekennzeichnet, dass** das Tensid mit einem Anteil zwischen 0,2 bis 5 Masse-% in demineralisiertem Wasser gelöst ist.

5. Kühlschmierstoff nach einem der Ansprüche 1 bis 4, **dadurch gekennzeichnet, dass** die Oberflächenspannung im Bereich von 25 bis 35 mN/m eingestellt ist.

6. Kühlschmierstoff nach einem der Ansprüche 1 bis 5, **dadurch gekennzeichnet, dass** ein Korrosionsschutzmittel enthalten ist.

7. Kühlschmierstoff nach Anspruch 6,
**dadurch gekennzeichnet, dass** Dinatriumhydrogenphosphat enthalten ist.

8. Kühlschmierstoff nach Anspruch 6 oder 7,
**dadurch gekennzeichnet, dass** im Kühlschmierstoff das Korrosionsschutzmittel mit einem Anteil zwischen 0,3 bis 1 Masse-% enthalten ist.

9. Kühlschmierstoff nach einem der Ansprüche 1 bis 8, **dadurch gekennzeichnet, dass** der Kühlschmierstoff in einem Druckbehälter mit einem Treibgas enthalten ist.

10. Kühlschmierstoff nach Anspruch 9,
**dadurch gekennzeichnet, dass** CO₂ als Treibgas enthalten ist.

11. Verfahren zur Entfernung von Polymeren auf Polyurethanbasis von Oberflächen mit einem Kühlschmierstoff nach einem der Ansprüche 1 bis 10, bei dem der Kühlschmierstoff auf das Polymer, dieses vollständig benetzend, aufgetragen oder aufgesprüht und das Polymer mit einem Schneid- oder Schabwerkzeug mechanisch entfernt wird, wobei mit dem Kühlschmierstoff Späne abgeführt werden.

12. Verwendung des Kühlschmierstoffes nach einem der Ansprüche 1 bis 10 zur mechanischen Entfernung von Karosserie- oder Scheibenklebern auf Polyurethanbasis von metallischen Oberflächen oder Fahrzeugkarosserie- oder Fahrzeuginnenverkleidungsteilen.
